# EUROPEAN PATENT SPECIFICATION

(11) **EP 1 050 213 B1**
(45) Date of publication and mention of the grant of the patent: **23.11.2005**
(21) Application number: 99947796.1
(22) Date of filing: 08.10.1999
(51) Int. Cl.: A23B 7/148, A01M 13/00, A23L 3/3418, A23B 9/20

(54) **METHOD FOR TREATMENT OF PRODUCTS WITH CARBON DIOXIDE AND NITROGEN**
METHODE ZUR BEHANDLUNG VON PRODUKTEN MIT KOHLENDIOXID UND STICKSTOFF
PROCEDE DE TRAITEMENT DE MARCHANDISES AVEC DU DIOXYDE DE CARBONE ET DE L'AZOTE

(30) Priority: 20.11.1998 AR 0105894
(43) Date of publication of application: 08.11.2000
(73) Proprietor: Cavana, Marcelo Alejandro, CEP-01050-906 San Pablo (BR); Koster, Carlos Ernesto, B184 BTV Ezpeleta (Buenos Aires) (AR)
(72) Inventor: Koster, Carlos Ernesto, B1840BTV-Ezpeleta, Buenos Aires (AR)
(74) Representative: Schneider Feldmann AG Patent- und Markenanwälte
(86) International application number: PCT/IB1999/001651
(87) International publication number: WO 2000/030459

(56) References cited:
- EP-A- 0 292 834
- EP-A- 0 329 643
- EP-A- 0 561 065
- EP-A- 0 865 731
- WO-A-91/00018
- DE-A- 3 614 387
- GB-A- 1 379 707
- NL-A- 8 302 861

## Description

This invention relates to a method for the treatment of goods with carbon dioxide and nitrogen. More particularly, the method of this invention involves removing all of the pesticides from fumigation and replacing them with carbon dioxide and nitrogen wherein the carbon dioxide and nitrogen are generated in the same place where the goods are to be stored. This may be during transportation of the goods in ships or in storage plants. Due to its low cost and to the fact that the gases are considered organic, an additional value is provided to cereals, grains and subproducts.

Requirements to use lower quantities of pesticides on goods bound for human and animal consumption have been increasing in the past few years. However, such goods are not accepted due to deterioration by insects, mushrooms, parted grains, etc.

In the storage of large quantities of cereals and subproducts, there are significant problems such as increasing of temperatures, fermentation, insects attacks, proliferation of mushrooms, etc. The temperature increase is due to the pressure and humidity, thereby increasing the risk of fire. On the other hand, mushrooms have been major problems for goods over the past few years, due to the fact that the presence of mycotoxins can cause the goods to have to be discarded.

Presently, to fight against such problems, techniques such as movement of the goods, ventilation and fumigation with pesticides are being used. However, such techniques generate some inconveniences, because the movement causes the parting of the grains, with a subsequent loss of quality and conventional fumigations apart from having a high cost, are being eliminated due to new ecological concerns. In addition, in countries such as Germany and Holland it is difficult to carry out fumigation due to the fact that both silos and mills are located in urban areas. This is why the government does not allow the use of some of the fumigant gases such as phosphamine (aluminium phosphide), methyl bromide and others. Consequently, it is even more difficult to maintain the goods healthy and without insects.

Carbon dioxide is a common gas in the atmosphere and, thus, it is not considered toxic. Using this gas, all of the problems discussed above are solved, because eliminating all of the oxygen from a room and replacing it with carbon dioxide or nitrogen results in elimination of all the insects and aerobic mushrooms. In addition, because there is no oxygen, the oxidation that occurs in the goods and generates an increase of the temperature or rancidness is prevented. Such is the case with oleaginous goods.

Patent Application GB 1,379,707 (Enrico Shejbal) disclosed a method and an apparatus for preserving perishable material by fumigating it with a mixture of pure nitrogen and carbon dioxide.

The ways to carry out the fumigation with this gas used to involve carrying cylinders of 6 to 10 cubic meters of gas to the place where the goods were located. Generally, the quantities of the goods to be treated are high making it necessary to carry a lot of cylinders. Because these cylinders are very heavy (110 to 140 kilograms each), the task is difficult and costs are very high. This is why this type of treatment has not been used. In addition, it was not competitive with pesticides. As an example, in silos of 20000 tons, with a size of approximately 26000 cubic meters, the amount of gas required to remove the oxygen is at least 11700 cubic meters (minimum 45% of the total size). The quantity of cylinders to be used would be 1170, having a total weight of 163800 kilograms. Only the necessary labor for such a task has a higher cost than the fumigation with any pesticide.

From PCT Application WO 91/00,018 (Banks et al.) an apparatus is known that can produce a gas with a low oxygen content by treating exhaust gases from an engine.

We have discovered a method for generating carbon dioxide and nitrogen in the place where the goods are located a competitive cost. The method of this invention, as disclosed in claims 1 to 4, depends principally on the place where the goods are located.

### Example 1

To carry out the method of this invention inside the holds of the vessels in accordance with one embodiment of this invention, the gases that are emitted from the steamer engines exhaust chimneys are used. These gases comprise carbon dioxide, nitrogen, carbon monoxide and other gases coming from the engine combustion. The quantity of gases that these engines produce is substantially greater than what is necessary to fumigate all of the holds of the vessel. Therefore, it is desirable to separate out the desired gases. To separate the carbon dioxide and nitrogen, the gases coming from the exhaust are washed, filtered, cooled and catalysed. The separated carbon dioxide and nitrogen are then transmitted to the holds to be fumigated. With some easy calculations, the amount of time required for the process can be readily determined. Thereafter, the device is disconnected and the goods are completely protected.

### Example 2

In the case of oil extraction plants, all of them have boilers. Presently, all of the gases they produce are emitted to the atmosphere. Performing the same treatment above mentioned, we can obtain from those gases the carbon dioxide and the nitrogen we are interested in for carrying out the treatment to the stored goods.

### Example 3

In the case of silo plants, there are no boilers or engines from which to obtain the gases. In this case, mobile carbon dioxide and nitrogen generators are used, which use the same air from inside the silo, consuming more than 98% of the oxygen. In this case, through a pipe located in the upper part of the silo, the air contained inside the silo is transmitted to the generator. Once the carbon dioxide and the nitrogen are generated, they are transmitted back to the silo through another pipe. This will start the air moving upwards, as a result of which after a certain amount of time, all the air contained inside the silo will go through the generator and all the carbon dioxide and nitrogen will be generated so as to saturate the atmosphere inside the silo. Once this point has been reached, the generator can be stopped, since, to maintain the combustion that generates the carbon dioxide and nitrogen, oxygen which is taken from inside the silo is needed.

With the examples above mentioned, we have shown the different ways to carry out the conditioning of the goods in accordance with the method of this invention in a way which is totally free of pesticides and fungicides, together with a cost highly competitive with conventional fumigation and treatment with fungicides. All this is looked for all around the world to reduce the quantity of chemical residues that remain in the goods which are bound to human consumption and which come from fumigation done in a conventional way.

## Claims

1. A method for the treatment of goods with carbon dioxide and nitrogen generated in the place where the goods are stored and produced from combustion exhaust gases, **characterized in that** the combustion exhaust gases are washed, filtered, cooled, and catalyzed, and that the location of said goods is selected from a group consisting of transportation vessels, plants where said goods are stored, oil extraction plants, silos and other storage sites.

2. A method according to claim 1, **characterized in that** said goods are located in a ship, and that the combustion exhaust gases are obtained from at least one of the ship's exhaust chimneys.

3. A method according to claim 1, **characterized in that** said goods are located in oil extraction plants, and that the combustion exhaust gases are obtained from at least one boilers in the oil extraction plants.

4. A method according to claim 1, **characterized in that** said goods are located in silos, and that the combustion exhaust gases are obtained from mobile carbon dioxide and nitrogen generators which extract oxygen from said silos and inject the combustion exhaust gases in said silos, until removal of about 98% of the oxygen is achieved.

## Patentansprüche

1. Ein Verfahren für die Behandlung von Produkten mit Kohlendioxid und Stickstoff, erzeugt an dem Ort, an welchem die Produkte gelagert werden und hergestellt aus Verbrennungsabgasen, **dadurch gekennzeichnet, dass** die Verbrennungsabgase gewaschen, gefiltert, gekühlt und katalysiert werden, und dass der Standort dieser Produkte ausgewählt ist aus einer Gruppe bestehend aus Transportbehältern, Anlagen, in denen diese Produkte gelagert werden, Ölgewinnungsanlagen, Silos und anderen Lagerorten.

2. Ein Verfahren gemäss Anspruch 1, **dadurch gekennzeichnet, dass** die genannten Produkte sich auf einem Schiff befinden, und dass die Verbrennungsabgase bezogen werden von mindestens einem der Abgaskamine des Schiffes.

3. Ein Verfahren gemäss Anspruch 1, **dadurch gekennzeichnet, dass** die genannten Produkte sich in Ölgewinnungsanlagen befinden, und dass die Verbrennungsabgase bezogen werden von mindestens einem Heizkessel in der Ölgewinnungsanlage.

4. Ein Verfahren gemäss Anspruch 1, **dadurch gekennzeichnet, dass** die genannten Produkte sich in Silos befinden, und dass die Verbrennungsabgase bezogen werden von mobilen Kohlendioxid- und Stickstoff-Erzeugern, welche Sauerstoff aus den genannten Silos extrahieren und die Verbrennungsabgase in die genannten Silos einspeisen, bis eine Entfernung von etwa 98% des Sauerstoffes erreicht ist.

## Revendications

1. Une méthode pour le traitement de marchandises avec du dioxyde de carbone et de l'azote, généré à l'endroit où les marchandises sont stockées et produit à partir de gaz d'échappement de combustion, **caractérisée en ce que** les gaz d'échappement de combustion sont lavés, filtrés, refroidis et catalysés, et que l'emplacement desdites marchandises est choisi parmi un groupe se composant de vaisseaux de transport, d'usines où lesdites marchandises sont stockées, d'usines d'extraction d'huile, de silos et d'autres dépôts.

2. Une méthode selon la revendication 1, **caractérisée en ce que** les marchandises sont situées dans un navire, et que les gaz d'échappement de combustion sont obtenus à partir d'au moins une des cheminées d'échappement du navire.

3. Une méthode selon la revendication 1, **caractérisée en ce que** lesdites marchandises sont situées dans des usines d'extraction d'huile et que les gaz d'échappement de combustion sont obtenus à partir d'au moins une chaudière dans les usines d'extraction d'huile.

4. Une méthode selon la revendication 1, **caractérisée en ce que** les marchandises sont situées dans des silos, et que les gaz d'échappement de combustion sont obtenus à partir de générateurs mobiles de dioxyde de carbone et d'azote qui extraient l'oxygène desdits silos et injectent les gaz d'échappement de combustion dans lesdits silos, jusqu'à ce qu'un enlèvement d'environ 98% d'oxygène soit atteint.
